# EUROPEAN PATENT SPECIFICATION

(11) **EP 3 521 061 B1**
(45) Date of publication and mention of the grant of the patent: **16.09.2020**
(21) Application number: 18214340.4
(22) Date of filing: 20.12.2018
(51) Int. Cl.: B60C 9/22, B60C 9/26, B60C 9/30

(54) **TIRE**
REIFEN
PNEUMATIQUE

(30) Priority: 06.02.2018 JP 2018019510
(43) Date of publication of application: 07.08.2019
(73) Proprietor: Sumitomo Rubber Industries Ltd., Kobe-shi, Hyogo 651-0072 (JP)
(72) Inventor: HIKITA, Masahiro, Kobe-shi, Hyogo 651-0072 (JP)
(74) Representative: TBK

(56) References cited:
- EP-A1- 3 225 427
- EP-A1- 3 521 059
- WO-A1-88/03481
- DE-A1- 2 118 748
- JP-A- 2016 210 305

## Description

### Technical field

The present invention relates to a tire having a tread reinforcing layer.

### Background art

JP 2017-177842 A describes a motorcycle tire provided in the tread portion with a tread reinforcing band. This tread reinforcing band has shoulder parts having a mesh-like structure of a band cord. This mesh-like structure improves the cornering performance because the torsional rigidity of the shoulder parts is increased.

JP 2016 210305 A discloses a tread reinforcement layer including a crown reinforcement part which is provided on a tread crown part including a tire equator, and a pair of shoulder reinforcement parts which are provided on tread shoulder parts on both outer sides of the crown reinforcement part. The crown reinforcement part is formed in such a manner that a belt-like ply is wound at an angle of five degrees or less with respect to a tire circumferential direction. Each shoulder reinforcement part is formed into a mesh having a substantially rhombus-shaped space part surrounded by a first ramp and a second ramp in such a manner that the belt-like ply is wound in a zigzag form including the first ramp on which the belt-like ply is wound while being inclined in a first direction and the second ramp on which the belt-like ply is wound while being inclined in a second direction opposite to the first direction, and are so wound that side edges of the belt-like ply do not contact each other.

EP 3 225 427 A1, DE 21 18 748 A1 and WO 88/03481 A1 relate to similar tires.

### Summary of the invention

### Problems to be solved by the invention

The band having the mesh-like structure as described above is formed by inclining two strips of rubber coated cords in the opposite directions with respect to the tire circumferential direction so as to intersect each other. Therefore, at the intersections, the two strips overlap, and the mass becomes larger than the other portions. Therefore, the band of JP 2017-177842 A has a problem such that the variation in the mass distribution is large and, consequently, there is a possibility that the uniformity of the tread portion is deteriorated.

The present invention was made in view of the above circumstances, and a primary object of the present invention is to provide a tire improved in the uniformity of the tread portion while maintaining high cornering performance.

The object is solved by a tire according to claim 1. Advantageous developments are subject-matters of the dependent claims.

A tire according to claim 1 comprises:
a toroidal carcass, and
a tread reinforcing layer disposed radially outside the carcass in the tread portion, and comprising a reinforcing part formed from a rubber-coated cord strip of one or more reinforcing cords covered with topping rubber, wherein
the reinforcing part is formed by folding the rubber-coated cord strip alternately toward opposite directions at a first edge and a second edge of the reinforcing part so as to extend circumferentially of the tire, whereby
the reinforcing part is composed of inclined segments, first edge segments and second edge segments of the rubber-coated cord strip, wherein
the inclined segments all extend between the first edge and the second edge while inclining to one direction with respect to the tire circumferential direction, and spaced apart from each other in the tire circumferential direction, and the circumferentially adjacent inclined segments are connected by the first edge segments at the first edge, and connected by the second edge segments at the second edge alternately with the first edge segments.
The reinforcing part includes a first reinforcing part arranged in a first shoulder region of the tread portion.
The reinforcing part includes a second reinforcing part arranged in a second shoulder region of the tread portion.

The reinforcing part includes a third reinforcing part disposed in a crown region of the tread portion, and the third reinforcing part is formed from the rubber-coated cord strip wound spirally and circumferentially of the tire more than one turn.

In the tire according to the present invention, it is preferable that the first edge segments and the second edge segments extend in the tire circumferential direction.

In the tire according to the present invention, it is possible that the inclined segments in the first reinforcing part are all inclined in a first direction with respect to the tire circumferential direction, and the inclined segments in the second reinforcing part are all inclined in the first direction with respect to the tire circumferential direction.

In the tire according to the present invention, it is possible that the inclined segments in the first reinforcing part are all inclined in a first direction with respect to the tire circumferential direction, and the inclined segments in the second reinforcing part are all inclined in a second direction opposite to the first direction, with respect to the tire circumferential direction.

In the tire according to the present invention, it is preferable that the reinforcing part includes a first reinforcing part arranged in the first shoulder region of the tread portion, and the axial distance between the reinforcing cord located on the most first reinforcing part side of the third reinforcing part, and the reinforcing cord of the first reinforcing part which is adjacent in the tire axial direction, to the above-said reinforcing cord located on the most first reinforcing part side of the third reinforcing part is smaller than 500% of an axial distance between the axially adjacent turns of the reinforcing cord/cords of third reinforcing part.

In the tire according to the present invention, it is preferable that the rubber-coated cord strip forming the third reinforcing part has only one reinforcing cord embedded therein.

### Effects of the Invention

In the tire according to the present invention, the reinforcing part is composed of the inclined segments extending between the first edge and the second edge while inclining with respect to the tire circumferential direction, and the first and second edge segments alternately connecting the inclined segments at the first and second edges. And the inclined segments are arranged apart from each other in the tire circumferential direction. Such reinforcing part can be formed without intersections of the rubber-coated cord strip, so the variation in the mass distribution of the reinforcing part is reduced and the uniformity is improved.

In addition, all the inclined segments in the reinforcing part are inclined in the same direction with respect to the tire circumferential direction. Such inclined segments can be densely arranged in the tire circumferential direction without crossing the rubber-coated cord strip, so the binding force becomes large. Therefore, a decrease in the rigidity of the tread portion is suppressed, and a high cornering performance is maintained.

Thus, the tire according to the present invention can be improved in the uniformity, while maintaining high cornering performance.

### Brief description of the drawings

Fig. 1 is a cross-sectional view of a motorcycle tire as an embodiment of the present invention.
Fig. 2 is a perspective view of a part of the rubber-coated cord strip.
Fig. 3 is an developed view showing a reinforcing part of the tread reinforcing layer.
Fig. 4 is a developed view showing a reinforcing part of the tread reinforcing layer of another embodiment.
Fig. 5 is an enlarged view showing the vicinity of the boundary between the first reinforcing part and the third reinforcing part of Fig. 4.
Fig. 6 is a developed view showing a reinforcing part of the tread reinforcing layer of still another embodiment.
Fig. 7 is a developed view showing a reinforcing part of the tread reinforcing layer of yet still another embodiment.

### Description of the preferred embodiments

Embodiments of the present invention will now be described in detail in conjunction with accompanying drawings.

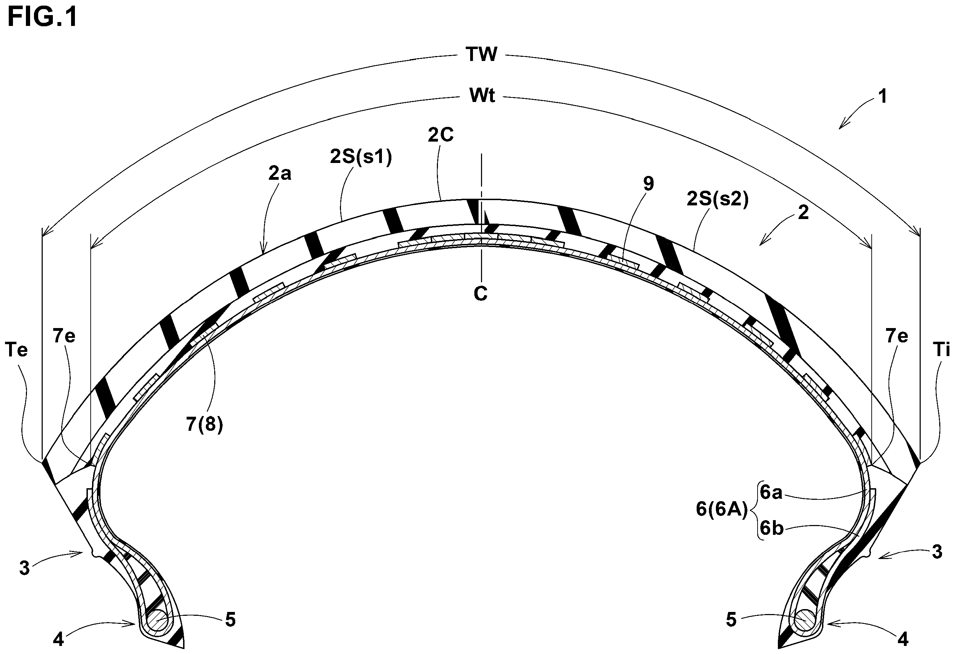

Fig. 1 is a meridian cross-sectional view (including the tire rotation axis (not shown)) of a tire 1 as an embodiment of present invention under its normal state.

In this embodiment, the tire 1 is a pneumatic tire for motorcycles. But, the present invention can be applied to various tires, for example, pneumatic tires for passenger cars, heavy duty pneumatic tires and the like.

The "normal state" is a state in which the tire 1 is mounted on a standard rim (not shown), inflated to a standard pressure, and loaded with no tire load.

In the present specification, unless otherwise noted, dimensions of each part of the tire 1 refer to values measured under the normal state.

The "standard rim" is a rim specified for the tire in the standard system comprising the standard on which the tire 1 is based, for example, "Standard rim" for JATMA, "Design rim " for TRA, "Measuring rim " for ETRTO.

The "standard pressure" is an air pressure specified for the tire in the standard system comprising the standard on which the tire 1 is based, for example, "Maximum air pressure" for JATMA, "Inflation pressure" for ETRTO, Maximum value specified in "TIRE LOAD LIMITS AT VARIOUS COLD INFLATION PRESSURES" table for TRA.

As shown in Fig.1, the tire 1 in this embodiment comprises a tread portion 2 having a tread surface 2a contacting with the ground, a toroidal carcass 6, a tread reinforcing layer 7 disposed radially outside the carcass 6 in the tread portion 2.

The tread portion 2 is curved in an arc shape protruding radially outwardly, and has a first tread edge Te (left side in the figure) and a second tread edge Ti (right side in the figure). The first tread edge Te and the second tread edge Ti are located at the outermost positions in the tire axial direction of the tire 1.

The tread portion 2 has a crown region 2C including the tire equator C and a pair of shoulder regions 2S on both sides thereof.
In this embodiment, the crown region 2C corresponds to a portion located in the center when the developed tread width TW is equally divided into five portions.
The shoulder regions 2S are a region between the first tread edge Te and the crown region 2C, and a region between the second tread edge Ti and the crown region 2C.
The pair of shoulder regions 2S of this embodiment is constituted from a first shoulder region s1 including the first tread edge Te and a second shoulder region s2 including the second tread edge Ti.
Here, the developed tread width TW is the width measured along the tread surface 2a between the first tread edge Te and the second tread edge Ti.

The carcass 6 is composed of at least one carcass ply 6A. The carcass ply 6A is formed, for example, from carcass cords rubberized with unvulcanized topping rubber and inclined at an angle of 75 to 90 degrees with respect to the tire equator C. The carcass ply 6A comprises, for example, a main body portion 6a extending between bead cores 5 on both sides disposed in the respective bead portions 4 through the tread portion 2 and the sidewall portions 3, and a pair of turnup portions 6b continued from the main body portion 6a .

In the meridian cross section of the tire, the tread reinforcing layer 7 extends over substantially the entire width of the tread portion 2, while curving along the tread portion 2. Thus, the tread reinforcing layer 7 can increase the rigidity of the tread portion 2 over the entire area of the tread portion 2. From this viewpoint, it is preferable that the width Wt of the tread reinforcing layer 7 measured along the tread reinforcing layer 7 is set in a range from 75% to 95% of the developed tread width TW.

The tread reinforcing layer 7 in this embodiment comprises a reinforcing part 8 formed by winding a rubber-coated cord strip 9 around the carcass 6.

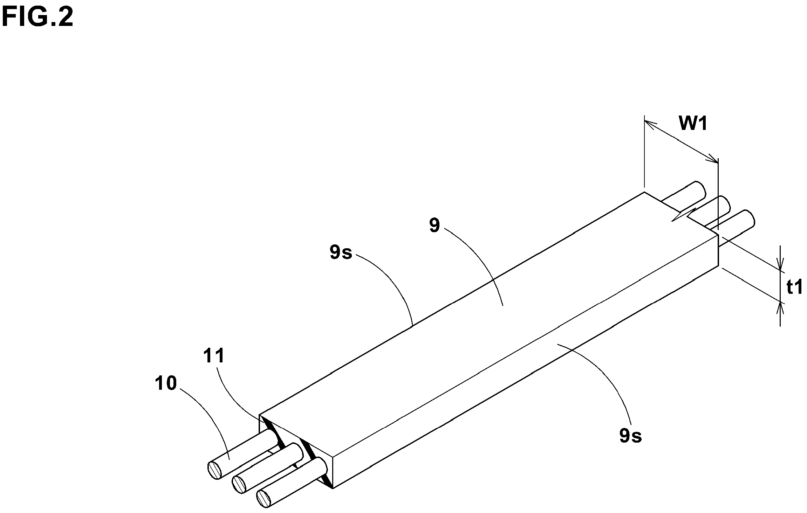

Fig. 2 is a perspective view of a part of the rubber-coated cord strip 9. In Fig. 2, the rubber-coated cord strip 9 has a substantially rectangular cross section and has two side edges 9s.
The width W1 of the rubber-coated cord strip 9 is preferably set in a range from 2.5 to 12.0 mm, for example.
The thickness t1 of the rubber-coated cord strip 9 is preferably set in a range from 0.6 to 3.0 mm, for example.

The rubber-coated cord strip 9 is formed by covering one or more reinforcing cords 10 with a topping rubber 11. For the reinforcing cords 10, for example, steel cords and organic fiber cords are preferably used. In this embodiment, the reinforcing cords 10 extend along the side edges 9s.

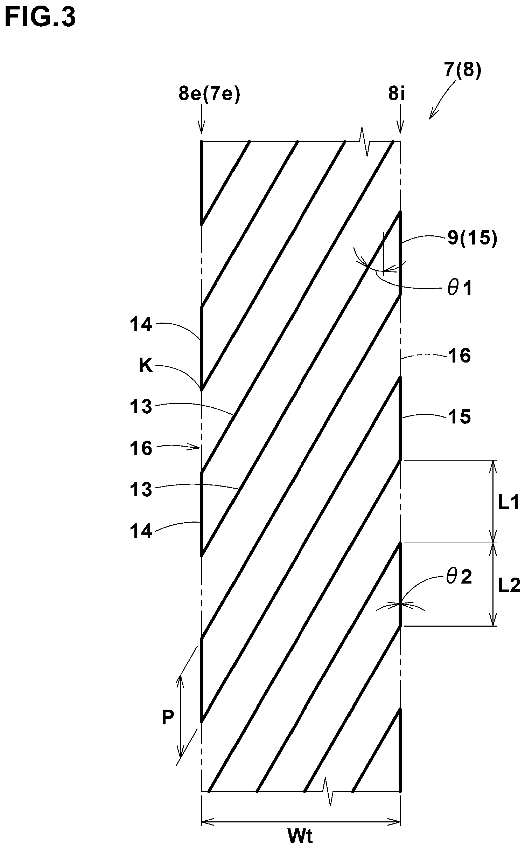

Fig. 3 is a developed view of the reinforcing part 8 of the tread reinforcing layer 7.
In the figures (Figs. 3, 4, 6 and 7), for the sake of convenience, the rubber-coated cord strip 9 is indicated by a single solid line (corresponding to the center line in the width direction).

The reinforcing part 8 has a first edge 8e on one side in the tire axial direction (left side in the figure) and a second edge 8i on the other side in the tire axial direction (on the right side in the figure).

The reinforcing part 8 is formed by folding the rubber-coated cord strip 9 alternately toward opposite directions at the first edge 8e and the second edge 8i so as to extend circumferentially of the tire.

Thus, the reinforcing part 8 is composed of inclined segments 13, first edge segments 14 and second edge segments 15 of the rubber-coated cord strip 9.

The inclined segments 13 extend between the first edge 8e and the second edge 8i at an angle with respect to the tire circumferential direction. The circumferentially adjacent inclined segments 13 are connected by the first edge segments 14 at the first edge 8e, and connected by the second edge segments 15 at the second edge 8i alternately with the first edge segments 14. The inclined segments 13 are spaced apart from each other in the tire circumferential direction. Such reinforcing part 8 can be formed without intersections of the rubber-coated cord strip 9, therefore, the variation in the mass distribution of the reinforcing part 8 is reduced and the uniformity is improved.

The inclined segments 13 in the reinforcing part 8 are all inclined in the same direction (for example, diagonally right up) with respect to the tire circumferential direction. Such inclined segments 13 can be densely arranged in the tire circumferential direction without crossing the rubber-coated cord strip 9, so the binding force is increased. Therefore, the decrease in the rigidity of the tread portion 2 is suppressed to ensure the cornering performance. As a result, the tire 1 of this embodiment can be improved in the uniformity while maintaining excellent cornering performance.

In this embodiment, each of the inclined segments 13 extends linearly. Such inclined segments 13 can increase the binding force. Therefore, the cornering performance is maintained high.

In the present specification, the expression "extend linearly" means that the inclined segment extends between the first edge 8e and the second edge 8i at a constant angle θ1 as well as a variable angle θ1 of at most 10 degrees with respect to the tire circumferential direction.

It is preferable that the angle θ1 of each of the inclined segments 13 with respect to the tire circumferential direction is 10 degrees or less. Such inclined segment 13 has a large component in the tire circumferential direction, so the deformation of the carcass 6 is effectively suppressed, and the cornering performance is improved.
when the angle θ1 is excessively small, the bending stress of the cords at the connecting portions K between the inclined segments 13 and the first/second edge segments 14/15 increases. Thus, there is a possibility that, at the connecting portions, the rubber-coated cord strip 9 is separated from the adjacent tire components, and the cornering performance is deteriorated. Therefore, it is desirable that the angle θ1 is 3 degrees or more. when the angle θ1 is variable, the angle θ1 is an average angle obtained by weighting the angle between the first edge 8e and the second edge 8i with the length.

In this embodiment, the first edge segments 14 and the second edge segments 15 extend in parallel with the tire circumferential direction. As a result, they exhibit a large binding force to the carcass 6, and can maintain the high cornering performance.

In order to effectively derive the above effect, it is preferable that the first edge segments 14 and the second edge segments 15 each have an angle θ2 of not more than 3 degrees, more preferably not more than 1 degree with respect to the tire circumferential direction.

In the reinforcing part 8 in this embodiment, at the first edge 8e, between the first edge segments 14, there are formed gaps 16 where no rubber-coated cord strip 9 exists. In other words, the gaps 16 alternate with the first edge segments 14 at the first edge 8e.
In the reinforcing part 8 in this embodiment,
at the second edge 8i, between the second edge segments 15, there are formed gaps 16 where no rubber-coated cord strip 9 exists. In other words, the gaps 16 alternate with the second edge segments 15 at the second edge 8i.
Such gaps 16 suppress an excessive increase in the binding force at the first edge 8e and the second edge 8i, and can reduce reaction forces and vibrations during running caused by gaps on the road surface and the like. Thus, the ground contact feeling is improved.

The length L1 in the tire circumferential direction of each of the gaps 16 is preferably not less than 80%, more preferably not less than 90% of the length L2 in the tire circumferential direction of the first/second edge segments 14/15 adjacent to the gap 16.
Further, the length L1 is preferably not more than 120%, more preferably not more than 110% of the length L2. As a result, the rubber-coated cord strip 9 of the reinforcing part 8 included in the ground contacting patch is uniformly arranged, and stable cornering performance is exhibited at all positions around the tire. Also, the puncture resistance of the tire can be enhanced. Furthermore, since the variation in the mass distribution of the reinforcing part 8 can be reduced, excellent uniformity is maintained.
From this viewpoint, it is more desirable that the length L 1 is equal to the length L 2.

The inclined segments 13 are arranged at a pitch P in the tire circumferential direction. The pitch P is preferably set in a range from 3% to 15% of the circumferential length of the tread reinforcing layer 7 measured at the tire equator C. As a result, high cornering performance can be obtained.
If the pitch P is small, as the mass of the tire is increased, there is a possibility that the cornering performance is rather deteriorated.
Here, the pitch P is the length in the tire circumferential direction measured at the edges of the reinforcing part 8.

In this embodiment, the reinforcing part 8 is formed by a repetition of an inclined segment 13, a first edge segment 14, an inclined segment 13, a second edge segment 15, an inclined segment 13 ---- of the single rubber-coated cord strip 9.

The reinforcing part 8 of this embodiment may be arranged only in each shoulder region 2S.
The reinforcing part 8 of this embodiment may be arranged only in the crown region 2C.
The reinforcing part 8 of this embodiment may be arranged across two regions: the first shoulder region s1 and the crown region 2C.
The reinforcing part 8 of this embodiment may be arranged so as to extend from the first shoulder region s1 to the second shoulder region s2. In this embodiment, the reinforcing part 8 forms the entirety of the tread reinforcing layer 7.

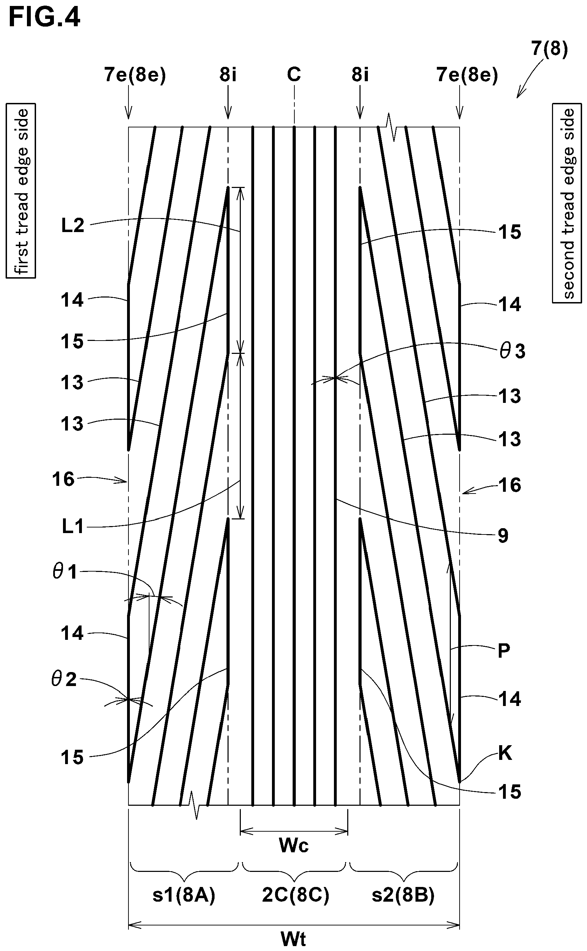

Fig. 4 is a developed view showing a reinforcing part 8 of another embodiment. The same components as those of the reinforcing part 8 in Fig. 3 are denoted by the same reference numerals, and their explanation is omitted.

As shown in Fig. 4, the reinforcing part 8 of this embodiment includes a first reinforcing part 8A arranged in the first shoulder region s1 and a second reinforcing part 8B arranged in the second shoulder region s2.

In this embodiment, each of the first reinforcing part 8A and the second reinforcing part 8B is composed of the inclined segments 13, the first edge segments 14 and the second edge segments 15. The first edge 8e of the first reinforcing part 8A is located on the first tread edge Te side. The first edge 8e of the second reinforcing part 8B is located on the second tread edge Ti side.
In this embodiment, these first edges 8e are respectively positioned at both edges 7e in the tire axial direction of the tread reinforcing layer 7.

In this embodiment, the inclined segments 13 in the first reinforcing part 8A are all inclined in a first direction with respect to the tire circumferential direction (diagonally right up in the figure), whereas the inclined segments 13 in the second reinforcing part 8B are all inclined in a second direction opposite to the first direction with respect to the tire circumferential direction (diagonally right down in the figure). As a result, a cornering force in the opposite directions occurs in the left turn and right turn, therefore, the cornering performance is improved.

In this embodiment, the first reinforcing part 8A and the second reinforcing part 8B are line symmetric about the tire equator C as their center. As a result, the above-described action is effectively exhibited.
In this embodiment, the first edge segments 14 of the first reinforcing part 8A are arranged at the same circumferential positions as the first edge segments 14 of the second reinforcing part 8B.
In this embodiment, the second edge segments 15 of the first reinforcing part 8A are arranged at the same circumferential positions as the second edge segments 15 of the second reinforcing part 8B.

The reinforcing part 8 in this embodiment includes a third reinforcing part 8C arranged in the crown region 2C.

The third reinforcing part 8C is formed by winding the rubber-coated cord strip 9 spirally and circumferentially of the tire more than one turn, so that the rubber-coated cord strip 9 extends substantially parallel with the tire circumferential direction.
Such third reinforcing part 8C exerts a particularly large binding force to the crown region 2C contacting with the ground during straight running which mainly results in high-speed running, therefore, deformation of the tread portion 2 due to the centrifugal force during high speed running can be suppressed. In addition, such third reinforcing part 8C reduces the torsional rigidity of the crown region 2C to generate low cornering power, therefore, reaction forces and vibrations caused by, for example, gaps on the road surface and the like can be reduced, and the ground contact feeling is improved. As a result, the third reinforcing part 8C can improve the high-speed stability performance.

In the third reinforcing part 8C in this embodiment, the rubber-coated cord strip 9 is wound at least two turns.

In this specification, the expression "substantially parallel with the tire circumferential direction" means that the rubber-coated cord strip 9 extends at an angle θ3 in a range from 0 to 8 degrees with respect to the tire circumferential direction.
In this specification, the angle θ3 is an average angle obtained by averaging the angle all over the circumference of the third reinforcing part 8C.

In the third reinforcing part 8C in this embodiment, the side edges 9s of the rubber-coated cord strips 9 adjacent in the tire axial direction are substantially in contact with each other so that the third reinforcing part 8C continues in the tire axial direction. However, it is also possible that the side edges 9s adjacent in the tire axial direction are overlapped with each other, or alternatively separated from each other in the tire axial direction.

It is preferable that the rubber-coated cord strip 9 forming the third reinforcing part 8C has only one reinforcing cord 10 embedded therein. This may increase the torsional rigidity of the crown region 2C. Such rubber-coated cord strip 9 preferably has a width w1 of from 2.5 to 3.5 mm for example, and a thickness t1 of from 0.6 to 3.0 mm for example.

Preferably, the width Wc of the third reinforcing part 8C measured along the third reinforcing part 8C is not less than 5%, preferably not less than 8%, more preferably not less than 10% of the developed tread width TW. Preferably, the width wc of the third reinforcing part 8C is not more than 60%, preferably not more than 40%, more preferably not more than 20% of the developed tread width TW.

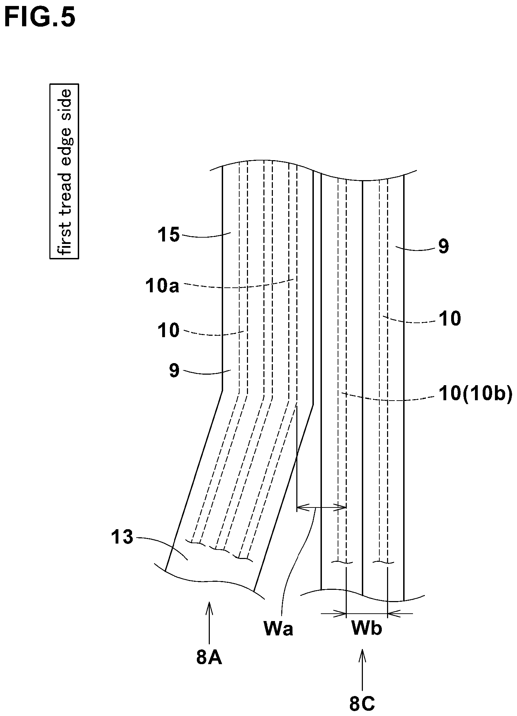

Fig. 5 is an enlarged view showing the vicinity of the boundary between the first reinforcing part 8A and the third reinforcing part 8C shown in Fig. 4.

As shown in Fig. 5, it is desirable that the axial distance Wa is smaller than 500% of the axial distance Wb. Here, the axial distance Wa is the distance between the reinforcing cord 10a of the first reinforcing part 8A located on the most third reinforcing part 8C side, and the reinforcing cord 10b of the third reinforcing part 8C located adjacently to the above-said reinforcing cord 10a in the tire axial direction.
The axial distance Wb is a distance between the turns of the reinforcing cord/cords 10 of the third reinforcing part 8C which turns are adjacent to each other in the tire axial direction.

If the axial distance Wa is 500% or more of the axial distance Wb, there is a possibility that the rigidity of a portion formed between the first reinforcing part 8A and the third reinforcing part 8C becomes small as compared with portions on both sides thereof, and the cornering performance is deteriorated. Further, if the distance Wa is 500% or more of the distance Wb, there is a possibility that the arrangement density of the reinforcing cords 10 becomes small, and the possibility of puncture due to nails, rocks and the like increases.

It is preferable that the axial distance Wa is not less than 50% of the axial distance Wb.
If the axial distance Wa is less than 50% of the axial distance Wb, there is a possibility that the rigidity of the portion between the first reinforcing part 8A and the third reinforcing part 8C becomes too large, and transient characteristics when initiating cornering is deteriorated.

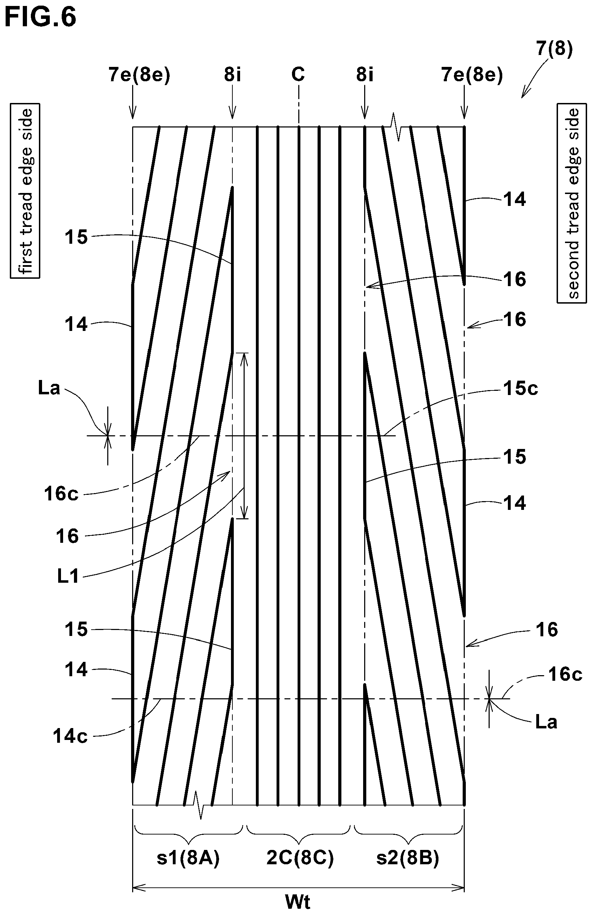

Fig. 6 is a developed view showing a reinforcing part 8 of still another embodiment. The same components as those of the reinforcing part 8 in Fig. 4 are denoted by the same reference numerals, and their explanation is omitted.

As shown in Fig. 6, the reinforcing part 8 in this embodiment comprises the first reinforcing part 8A arranged in the first shoulder region s1, the second reinforcing part 8B arranged in the second shoulder region s2, and the third reinforcing part 8C arranged in the crown region 2C.

In this embodiment, each of the first reinforcing part 8A and the second reinforcing part 8B is composed of the inclined segments 13, the first edge segments 14 and the second edge segments 15.

unlike the former example shown in Fig. 4, the first reinforcing part 8A and the second reinforcing part 8B in this embodiment are not line symmetrical about the tire equator C as their center. More specifically, the first edge segments 14 of the first reinforcing part 8A are shifted in the tire circumferential direction from the first edge segments 14 of the second reinforcing part 8B, and
the second edge segments 15 of the first reinforcing part 8A are shifted in the tire circumferential direction from the second edge segments 15 of the second reinforcing part 8B. The first edge segments 14 of the first reinforcing part 8A are arranged at the substantially same circumferential positions as the gaps 16 at the first edge 8e of the second reinforcing part 8B, and
the second edge segments 15 of the first reinforcing part 8A are arranged at the substantially same circumferential positions as the gaps 16 at the second edge 8i of the second reinforcing part 8B.
As a result, in the tire circumferential direction, the variation in the mass distribution of the reinforcing part 8 becomes smaller, and the uniformity is improved. Here, the expression "substantially same circumferential positions" means that the distance La in the tire circumferential direction between the intermediate position 14c/15c of the length L2 of the first/second edge segment 14/15, and the intermediate position 16c of the length L1 of the gap 16 is not more than 10% of the length L1.

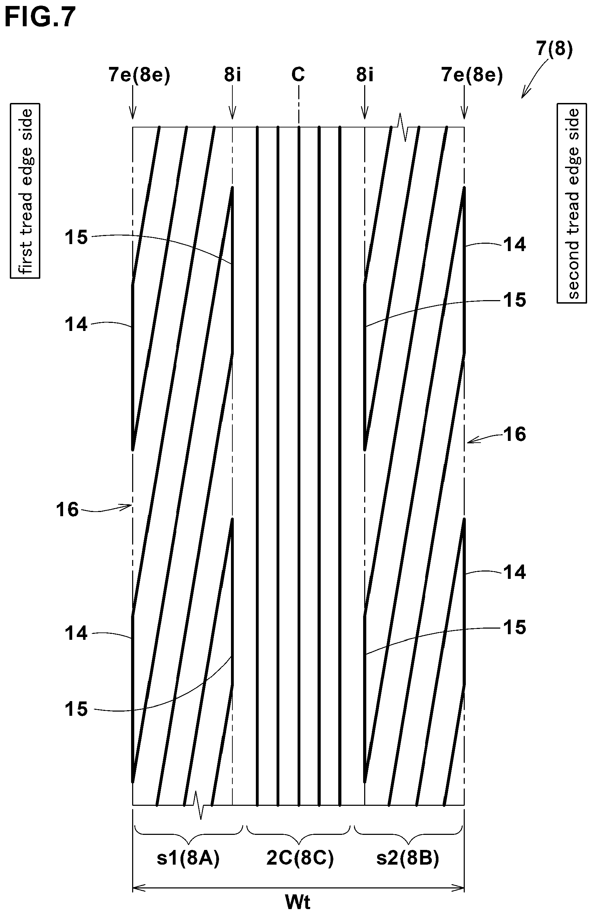

Fig. 7 is a developed view showing a reinforcing part 8 of still another embodiment. The same components as those of the reinforcing part 8 shown in Fig. 4 are denoted by the same reference numerals, and their explanation is omitted.

As shown in Fig. 7, the reinforcing part 8 of this embodiment is composed of the first reinforcing part 8A arranged in the first shoulder region s1, the second reinforcing part 8B arranged in the second shoulder region s2, and the third reinforcing part 8C arranged in the crown region 2C.

In this embodiment, each of the first reinforcing part 8A and the second reinforcing part 8B is composed of the inclined segments 13, the first edge segments 14 and the second edge segments 15.

The inclined segments 13 in the first reinforcing part 8A are all inclined in the first direction with respect to the tire circumferential direction (diagonally right up in the figure). The inclined segments 13 in the second reinforcing part 8B are all inclined in the above-said first direction with respect to the tire circumferential direction (diagonally right up in the figure). In this embodiment too, as the rubber-coated cord strip 9 is formed without intersections, the variation in the mass distribution of the reinforcing part 8 is reduced and the uniformity is improved.

In this embodiment, the first reinforcing part 8A and the second reinforcing part 8B are formed in substantially the same configuration. More specifically, the first edge segments 14 of the first reinforcing part 8A are arranged at the same circumferential positions as the second edge segments 15 of the second reinforcing part 8B, and
the second edge segments 15 of the first reinforcing part 8A are arranged at the same circumferential positions as the first edge segments 14 of the second reinforcing part 8B. As a result, the above-described effect is effectively exhibited.

### Working Examples

Motorcycle tires having the basic structure shown in Fig. 1 and the tread reinforcing layers in Figs. 3, 4 and 6 having specifications shown in Table 1 were experimentally manufactured, and tested for uniformity, high-speed stability performance, cornering performance, cornering force and puncture resistance. Common specifications are as follows.
Rubber-coated cord strip for the first and second reinforcing parts: 4.0 mm in width, 1.0 mm in thickness, three reinforcing cords embedded
Rubber-coated cord strip for the third reinforcing part: 2.5 mm in width, 1.0 mm in thickness, one reinforcing cord embedded
Tread reinforcing layer width Wt: 90% of TW
Third reinforcing part width Wc: 12% of TW
Pitch P: 10% of the circumference of the tread reinforcing layer at the tire equator
In Comparative Example 1 and Example 1, one rubber-coated cord strip having the same length was used.

### < Uniformity >

The radial force variation (RFV) of each tire was measured according to JASO C607:2000 "Test Procedures for Automobile Tire Uniformity" by the use of a tire uniformity test machine. The results are indicated in Table 1 by an index based on Comparative Example 1 being 100, wherein the smaller the numerical value, the better the uniformity.

### < High-speed stability performance and Cornering performance >

The test tires were mounted on all wheels of a 1300cc motorcycle under the following conditions.
Front wheel: tire size 120/70ZR17, rim size 17M/CxMT3.50, tire pressure 250 kPa
Rear wheel: tire size 190/55ZR17, rim size 17M/CxMT5.50, tire pressure 250 kPa

The motorcycle was run on a dry asphalt road in a test course, and the test tire was evaluated by the test rider based on high-speed running characteristics relating to handling stability, grip and the like, and cornering performance relating to transient characteristics during cornering, operability of the handle and the like. The results are indicated in Table 1 by an index based on Comparative Example 1 being 100, wherein the larger value is better.

### < Cornering force (Cornering Power) >

Using an indoor tire testing machine, the cornering force of each test tire was measured under the following conditions in order to obtain
a value CF(-1 degree) at the slip angle of -1 degree and
a value CF(+1 degree) at the slip angle of +1 degree.
Tire size: 190/55 ZR 17
Tire pressure: 200 kPa
Tire load: 1.3 kN
Running speed: 30 km/h
Then, the cornering power was obtained as {CF(+1 degree) - CF(-1 degrees)}/2. Namely, the cornering power obtained herein is the cornering force per 1 degree of the slip angle. The results are indicated in Table 1 by an index based on Comparative Example 1 being 100, wherein the larger the value, the higher the cornering power.

### < Puncture resistance >

According to the plunger test procedure specified in Japanese Industrial Standard JIS K 6366, the breaking energy of each test tire was measured. The results are indicated in Table 1 by an index based on Comparative Example 1 being 100, wherein the larger value is better.

**TABLE 1**

| Tire | comparative 1 | example 1 | example 2 | example 3 |
|---|---|---|---|---|
| tread reinforcing layer | mesh only | fig.3 | fig.4 | fig.4 |
| inclined segment angle θ1 (deg.) | 3 | 3 | 3 | 6 |
| Wa/Wb (%) | -- | -- | 100 | 100 |
| uniformity | 100 | 80 | 85 | 85 |
| high-speed stability performance | 100 | 100 | 110 | 107 |
| cornering performance | 100 | 98 | 100 | 100 |
| cornering force | 100 | 97 | 100 | 103 |
| puncture resistance | 100 | 100 | 110 | 110 |
| | | | | |

| Tire | example 4 | example 5 | example 6 | example 7 |
|---|---|---|---|---|
| tread reinforcing layer | fig.4 | fig.4 | fig.4 | fig.6 |
| inclined segment angle θ1 (deg.) | 10 | 3 | 3 | 3 |
| Wa/Wb (%) | 100 | 450 | 500 | 100 |
| uniformity | 85 | 85 | 85 | 85 |
| high-speed stability performance | 105 | 110 | 110 | 110 |
| cornering performance | 100 | 100 | 100 | 100 |
| cornering force | 105 | 100 | 97 | 98 |
| puncture resistance | 110 | 105 | 103 | 110 |

As a result of the tests, it was confirmed that the tire of each example is superior in balance to the tire of the comparative example.

### Reference Signs List

- 1: tire
- 7: tread reinforcing layer
- 8: reinforcing part
- 8e: first edge
- 8i: second edge
- 9: rubber-coated cord strip
- 13: inclined segment
- 14: first edge segment
- 15: second edge segment

## Claims

1. A tire (1) comprising:
a toroidal carcass (6), and
a tread reinforcing layer (7) disposed radially outside the carcass (6) in a tread portion (2), and comprising a reinforcing part (8) formed from a rubber-coated cord strip (9) of one or more reinforcing cords (10) covered with topping rubber (11),
wherein the reinforcing part (8) is formed of the rubber-coated cord strip (9) being folded alternately toward opposite directions at a first edge (8e) and a second edge (8i) of the reinforcing part (8) so as to extend circumferentially of the tire (1), whereby the reinforcing part (8) is composed of inclined segments (13), first edge segments (14) and second edge segments (15) of the rubber-coated cord strip (9), wherein
the inclined segments (13) all extending between the first edge (8e) and the second edge (8i) while inclining to one direction with respect to the tire circumferential direction, and spaced apart from each other in the tire circumferential direction, and
the circumferentially adjacent inclined segments (13) are connected by the first edge segments (14) at the first edge (8e) and connected by the second edge segments (15) at the second edge (8i) alternately with the first edge segments (14),
**characterized in that**
the reinforcing part (8) includes
a first reinforcing part (8A) arranged in a first shoulder region (s1) of the tread portion (2),
a second reinforcing part (8B) arranged in a second shoulder region (s2) of the tread portion (2), and
a third reinforcing part (8C) disposed in a crown region (2C) of the tread portion (2), and the third reinforcing part (8C) is formed from a rubber-coated cord strip (9) wound spirally and circumferentially of the tire (1) more than one turn.

2. The tire (1) according to claim 1, wherein the first edge segments (14) and the second edge segments (15) extend in the tire circumferential direction.

3. The tire (1) according to claim 1 or claim 2, wherein the inclined segments (13) in the first reinforcing part (8A) are all inclined in a first direction with respect to the tire circumferential direction, and the inclined segments (13) in the second reinforcing part (8B) are all inclined in said first direction with respect to the tire circumferential direction.

4. The tire (1) according to claim 1 or claim 2, wherein the inclined segments (13) in the first reinforcing part (8A) are all inclined in a first direction with respect to the tire circumferential direction, and the inclined segments (13) in the second reinforcing part (8B) are all inclined in a second direction opposite to the first direction, with respect to the tire circumferential direction.

5. The tire (1) according to any one of claims 1 to 4, wherein the reinforcing part (8) includes a first reinforcing part (8A) arranged in the first shoulder region (s1) of the tread portion (2), and the axial distance (Wa) between the reinforcing cord (10b) of the third reinforcing part (8C) located closest to first reinforcing part (8A), and the reinforcing cord (10a) of the first reinforcing part (8A) which is adjacent in the tire axial direction, to the above-said reinforcing cord (10b) of the third reinforcing part (8C) located closest to first reinforcing part (8A), is smaller than 500% of an axial distance (Wb) between the axially adjacent turns of the reinforcing cord/cords (10) of the third reinforcing part (8C).

6. The tire (1) according to any one of claims 1 to 5, wherein the rubber-coated cord strip (9) forming the third reinforcing part (8C) has only one reinforcing cord (10) embedded therein.

## Patentansprüche

1. Reifen (1) mit:
einer torusförmigen Karkasse (6), und
einer Laufflächenverstärkungsschicht (7), die radial außerhalb der Karkasse (6) in einem Laufflächenabschnitt (2) angeordnet ist, und die einen Verstärkungsbestandteil (8) aufweist, der aus einem gummiummantelten Cordstreifen (9) eines oder mehrerer Verstärkungscorde (10) ausgeformt ist, die mit einem Gummibelag (11) überzogen sind,
wobei der Verstärkungsbestandteil (8) aus dem gummiummantelten Cordstreifen (9), der an einer ersten Kante (8e) und einer zweiten Kante (8i) des Verstärkungsbestandteiles (8) wechselseitig in entgegengesetzte Richtungen gefaltet ist, so dass er sich in sich um den Reifen (1) umlaufend erstreckt, wobei der Verstärkungsbestandteil (8) aus geneigten Segmenten (13), ersten Kantensegmenten (14) und zweiten Kantensegmenten (15) des gummiummantelten Cordstreifens (9) zusammengesetzt ist, wobei
die geneigten Segmente (13) sich alle zwischen der ersten Kante (8e) und der zweiten Kante (8i) erstrecken, während sie sich bezüglich der Umlaufrichtung in eine Richtung neigen, und in Abständen getrennt von einander in der Reifenumlaufrichtung angeordnet sind, und
die umlaufenden angrenzenden geneigten Segmente (13) mittels den ersten Kantensegmenten (14) an der ersten Kante (8e) und mittels den zweiten Kantensegmenten (15) an der zweiten Kante (8i) wechselseitig mit den ersten Kantensegmenten (14) verbunden sind, **dadurch gekennzeichnet, dass**
der Verstärkungsbestandteil (8) beinhaltet:
einen ersten Verstärkungsbestandteil (8A), der in einer ersten Schulterregion (s1) des Laufflächenabschnittes (2) eingerichtet ist,
einen zweiten Verstärkungsbestandteil (8B), der in einem zweiten Schulterbereich (s2) des Laufflächenabschnittes (2) angeordnet ist, und
einen dritten Verstärkungsbestandteil (8C), der in einer Scheitelregion (2C) des Laufflächenabschnittes (2) angeordnet ist, und wobei der dritte Verstärkungsbestandteil (8C) aus einem gummiummantelten Cordstreifen (9) ausgeformt ist, der mehr als eine Windung spiralförmig und den Reifen (1) umlaufend gewunden ist.

2. Reifen (1) nach Anspruch 1, wobei das erste Kantensegment (14) und das zweite Kantensegment (15) sich in der Reifenumlaufrichtung erstrecken.

3. Reifen (1) nach Anspruch 1 oder Anspruch 2, wobei die geneigten Segmente (13) in dem ersten Verstärkungsbestandteil (8A) alle bezüglich der Reifenumlaufrichtung in einer ersten Richtung geneigt sind, und die geneigten Segmente (13) in dem zweiten Verstärkungsbestandteil (8B) alle bezüglich der Reifenumlaufrichtung in besagter ersten Richtung geneigt sind.

4. Reifen nach Anspruch 1 oder Anspruch 2, wobei die geneigten Segmente (13) in dem ersten Verstärkungsbestandteil (8A) alle bezüglich der Reifenumlaufrichtung in einer ersten Richtung geneigt sind, und die geneigten Segmente (13) alle bezüglich der Reifenumlaufrichtung in eine zweite Richtung entgegengesetzt zu der ersten Richtung geneigt sind.

5. Reifen nach einem der Ansprüche 1 bis 4, wobei der Verstärkungsbestandteil (8) einen ersten Verstärkungsbestandteil (8A) beinhaltet, der in der ersten Schulterregion (s1) des Laufflächenabschnittes (2) angeordnet ist, und der axiale Abstand (Wa) zwischen dem Verstärkungscord (10b) des dritten Verstärkungsbestandteiles (8C), der sich am nächsten zu dem ersten Verstärkungsbestandteil (8A) befindet, und dem Verstärkungscord (10a) des ersten Verstärkungsbestandteiles (8A), der in der axialen Richtung benachbart ist, zu dem zuvor genannten Verstärkungscord (10b) des dritten Verstärkungsbestandteiles (8C), der sich am nächsten zu dem ersten Verstärkungsbestandteil (8A) befindet, kleiner ist, als 500% eines axialen Abstands (Wb) zwischen den axial angrenzenden Windungen des/der Verstärkungscordes/corde (10) des dritten Verstärkungsbestandteiles (8C).

6. Reifen (1) nach einem der Ansprüche 1 bis 5, wobei der gummiummantelte Cordstreifen (9), der den dritten Verstärkungsbestandteil (8C) ausformt, lediglich einen Verstärkungscord (10) darin eingebettet hat.

## Revendications

1. Pneu (1) comprenant :
une carcasse toroïdale (6), et
une couche de renforcement de bande de roulement (7) disposée radialement à l'extérieur de la carcasse (6) dans une partie de bande de roulement (2) et comprenant une partie de renforcement (8) formée à partir d'une bande de corde recouverte de caoutchouc (9) d'une ou de plusieurs cordes de renforcement (10) recouvertes avec un caoutchouc de revêtement (11),
dans lequel la partie de renforcement (8) est formée avec une bande de corde recouverte de caoutchouc (9) pliée de manière alternée vers des directions opposées au niveau d'un premier bord (8e) et d'un second bord (8i) de la partie de renforcement (8) afin de s'étendre circonférentiellement par rapport au pneu (1), moyennant quoi la partie de renforcement (8) est composée de segments inclinés (13), de premiers segments de bord (14) et de seconds segments de bord (15) de la bande de corde recouverte de caoutchouc (9), dans lequel :
les segments inclinés (13) s'étendant tous entre le premier bord (8e) et le second bord (8i) tout en s'inclinant dans une direction par rapport à la direction circonférentielle du pneu, et espacés les uns des autres dans la direction circonférentielle du pneu, et
les segments inclinés (13) circonférentiellement adjacents sont raccordés par les premiers segments de bord (14) au niveau du premier bord (8e) et raccordés par les seconds segments de bord (15) au niveau du second bord (8i) de manière alternée avec les premiers segments de bord (14),
**caractérisé en ce que** :
la partie de renforcement (8) comprend :
une première partie de renforcement (8A) agencée dans une première région d'épaulement (s1) de la partie de bande de roulement (2),
une deuxième partie de renforcement (8B) agencée dans une seconde région d'épaulement (s2) de la partie de bande de roulement (2), et
une troisième partie de renforcement (8C) disposée dans une région de couronne (2C) de la partie de bande de roulement (2), et la troisième partie de renforcement (8C) est formée à partir d'une bande de corde recouverte de caoutchouc (9) enroulée en spirale et de manière circonférentielle par rapport au pneu (1) sur plus d'un tour.

2. Pneu (1) selon la revendication 1, dans lequel les premiers segments de bord (14) et les seconds segments de bord (15) s'étendent dans la direction circonférentielle du pneu.

3. Pneu (1) selon la revendication 1 ou la revendication 2, dans lequel les segments inclinés (13) dans la première partie de renforcement (8A) sont tous inclinés dans une première direction par rapport à la direction circonférentielle du pneu, et les segments inclinés (13) dans la deuxième partie de renforcement (8B) sont tous inclinés dans ladite première direction par rapport à la direction circonférentielle du pneu.

4. Pneu (1) selon la revendication 1 ou la revendication 2, dans lequel les segments inclinés (13) dans la première partie de renforcement (8A) sont tous inclinés dans une première direction par rapport à la direction circonférentielle du pneu, et les segments inclinés (13) dans la deuxième partie de renforcement (8B) sont tous inclinés dans une seconde direction opposée à la première direction, par rapport à la direction circonférentielle du pneu.

5. Pneu (1) selon l'une quelconque des revendications 1 à 4, dans lequel la partie de renforcement (8) comprend une première partie de renforcement (8A) agencée dans la première région d'épaulement (s1) de la partie de bande de roulement (2), et la distance axiale (Wa) entre la corde de renforcement (10b) de la troisième partie de renforcement (8C) positionnée le plus à proximité de la première partie de renforcement (8A) et la corde de renforcement (10a) de la première partie de renforcement (8A) qui est adjacente, dans la direction axiale du pneu, à ladite corde de renforcement de dessus (10b) de la troisième partie de renforcement (8C) positionnée le plus à proximité de la première partie de renforcement (8A), est inférieure à 500 % d'une distance axiale (Wb) entre les tours axialement adjacents de la corde / des cordes de renforcement (10) de la troisième partie de renforcement (8C).

6. Pneu (1) selon l'une quelconque des revendications 1 à 5, dans lequel la bande de corde recouverte de caoutchouc (9) formant la troisième partie de renforcement (8C) n'a qu'une seule corde de renforcement (10) encastrée dans cette dernière.
